# EUROPÄISCHE PATENTSCHRIFT

(11) **EP 0 924 451 B1**
(45) Veröffentlichungstag und Bekanntmachung des Hinweises auf die Patenterteilung: **13.11.2002**
(21) Anmeldenummer: 98121743.3
(22) Anmeldetag: 16.11.1998
(51) Int. Cl.: F16K 11/07

(54) **Wegeventil**
Directional valve
Distributeur

(30) Priorität: 20.12.1997 DE 19757036
(43) Veröffentlichungstag der Anmeldung: 23.06.1999
(73) Patentinhaber: ROBERT BOSCH GMBH, 70442 Stuttgart (DE)
(72) Erfinder: Jungeilges, Rainer, 74232 Abstatt (DE)
(74) Vertreter: Maiwald, Walter, Dr. Dipl.-Chem.

(56) Entgegenhaltungen:
- DE-A- 2 206 766
- DE-A- 3 641 383
- DE-A- 4 324 465
- US-A- 2 938 704
- US-A- 3 523 555

## Beschreibung

### Stand der Technik

Die Erfindung geht von einem Wegeventil, insbesondere zur Steuerung von pneumatischen Verbrauchern, entsprechend der Gattung des Anspruchs 1 aus. Derartige Wegeventile sind in einer Vielzahl von Bauformen hinlänglich bekannt. Beispielsweise offenbart die DE 43 24 465 A1 ein Wegeventil, dessen Gehäuse aus einem Dichtungsträger und einem Dichtungshalter besteht. Der Dichtungsträger ist in eine nach außen offene taschenförmige Ausnehmung des Dichtungshalters eingesetzt und verschließt diese. Am Dichtungshalter und am Dichtungsträger sind jeweils zueinander beabstandete Radialstege ausgebildet, die im zusammengebauten Zustand des Gehäuses zur Ausbildung von Steuerkammern kammartig ineinander greifen. In Querbohrungen, die diese Radialstege durchdringen, sind Dichtungen eingesetzt. Die Querbohrungen des Dichtungshalters weisen gegenüber denen des Dichtungsträgers einen kleineren Innendurchmesser auf, so daß sich die Dichtungen seitlich abstützen können. Im von den Steuerkammern gebildeten Innenraum des Gehäuses ist ein Längsschieber beweglich geführt, der den Druckmittelfluß durch die einzelnen Steuerkammern des Wegeventils steuert.

Obwohl sich die Einzelteile des Gehäuses relativ preisgünstig in Kunststoff herstellen lassen, ist ein derartiges Wegeventil hinsichtlich bestimmter Anforderungen noch nicht optimal ausgelegt. So hat das Gehäuse aufgrund seiner Öffnung zur Aufnahme des Dichtungsträgers eine verhältnismäßig geringe Druckfestigkeit; ferner stellen der Dichtungshalter und der Dichtungsträger relativ komplex geformte Bauteile dar, die mit engen Toleranzen hergestellt werden müssen. Der Zusammenbau des Gehäuses muß mit großer Sorgfalt erfolgen, um Beschädigungen an den Stegen bzw. an den Dichtungen zu vermeiden. Eine automatische Montage von Dichtungshalter und Dichtungsträger ist daher relativ aufwendig.

### Vorteile der Erfindung

Demgegenüber weist das erfindungsgemäße Wegeventil mit den kennzeichnenden Merkmalen des Anspruchs 1 den Vorteil eines einfach herstellbaren Gehäuses mit durch Querschotte voneinander getrennten und nach außen offenen Steuerkammern auf, in die jeweils ein kastenförmiger Stützkörper eingesetzt ist. Der Stützkörper bildet die Abstützung für die in Durchgangsbohrungen der Querschotte aufgenommenen Dichtungen. Diese Bauweise ermöglicht ein kompakt bauendes Wegeventil, dessen Gehäuse neben einer hohen mechanischen Festigkeit einen hohen Durchfluß von Druckmittel erlaubt. Die Stützkörper sind dazu mit strömungsoptimierten Kanten preisgünstig und ohne spanende Nachbearbeitung spritzgußtechnisch herstellbar. Der Ventilkörper läßt sich in Kunststoff fertigen. Die Ausbildung des Gehäuses erlaubt auf einfache Weise die Darstellung von verschiedenen Ausführungsvarianten für das Wegeventil, beispielsweise als Platten-, Leisten- oder Einzelventil.

Weitere Vorteile oder vorteilhafte Weiterbildungen der Erfindung ergeben sich aus den Unteransprüchen und der Beschreibung.

### Zeichnung

Ein Ausführungsbeispiel der Erfindung ist in der Zeichnung dargestellt und in der nachfolgenden Beschreibung näher erläutert.

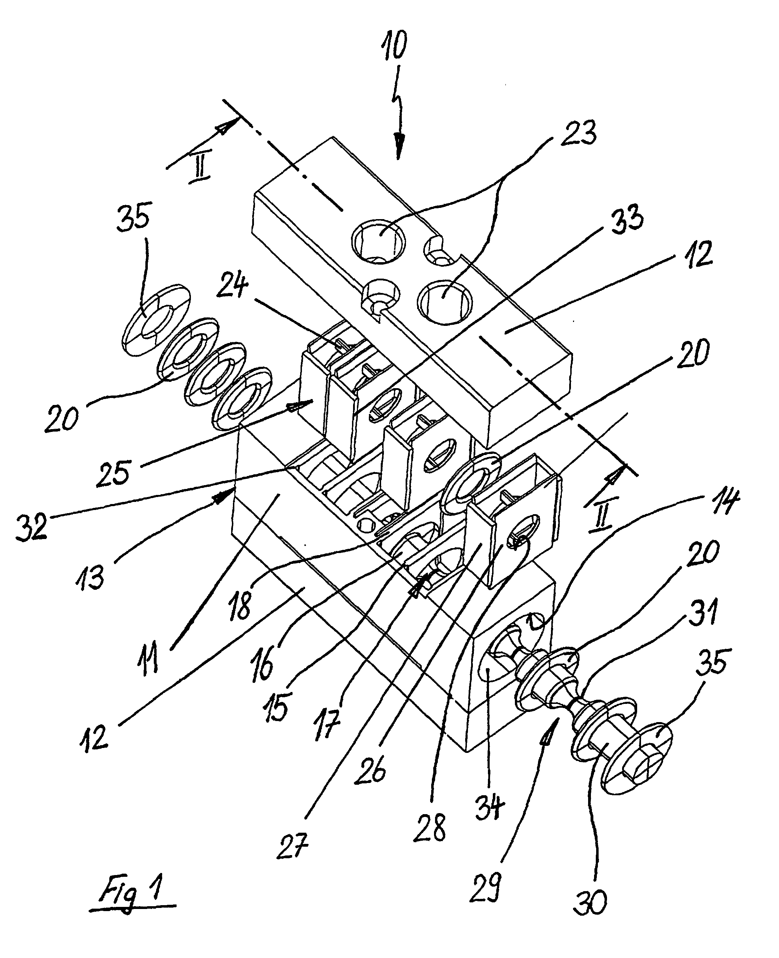

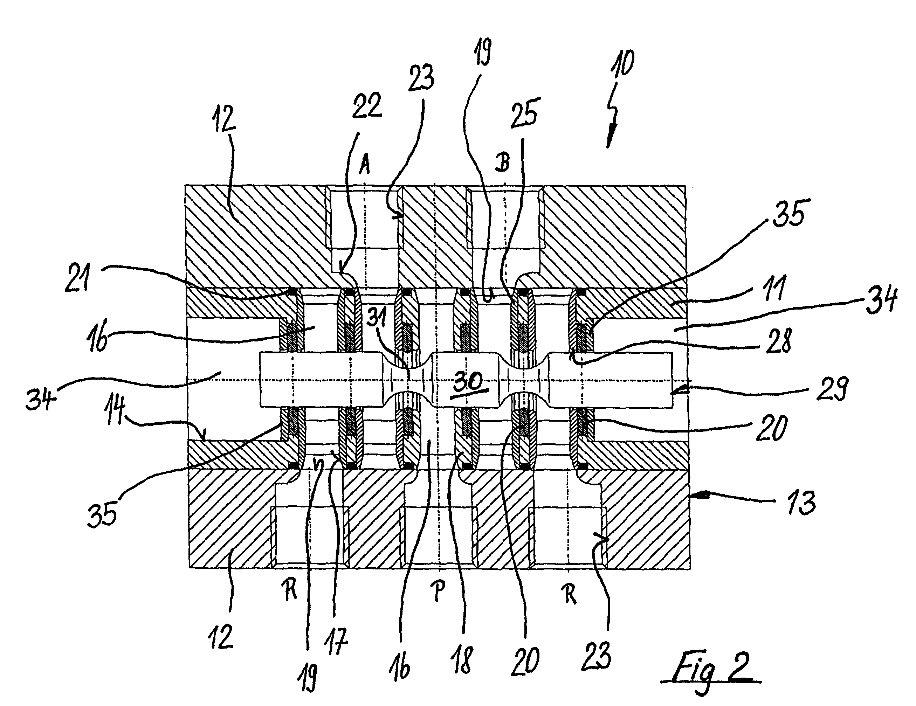

Figur 1 zeigt in einer Explosionsdarstellung das erfindungsgemäße Wegeventil mit seinen Einzelteilen in perspektivischer Ansicht. In Figur 2 ist ein Längsschnitt entlang der Linie II-II nach Figur 1 durch das zusammengebaute Wegeventil dargestellt.

### Beschreibung des Ausführungsbeispiels

In den Figuren 1 und 2 ist ein Wegeventil 10, insbesondere zur Steuerung von pneumatischen Verbrauchern, exemplarisch in 5/2-Bauweise dargestellt. Dieses Wegeventil 10 weist ein Gehäuse 13 aus einem Ventilkörper 11 mit zueinander rechtwinkligen Außenseiten auf. An zwei einander gegenüberliegenden Außenseiten des Ventilkörpers 11 sind Abdichtplatten 12 befestigt. In seiner Längsrichtung ist der Ventilkörper 11 von einer Schieberbohrung 14 durchdrungen. Nach Figur 2 ist diese Schieberbohrung 14 in ihrem Innendurchmesser mehrfach abgesetzt, wobei der größte Innendurchmesser jeweils im Bereich der beiden Stirnseiten des Ventilkörpers 11 ausgebildet ist und in Richtung zur Mitte des Ventilkörpers 11 hin stufenweise abnimmt. Zur Ausbildung von Steuerkammern 16 ist die Schieberbohrung 14 durch mehrere radial nach außen geführte und im wesentlichen kubisch geformte Durchbrüche 17 erweitert. Diese Durchbrüche 17 liegen in Längsrichtung der Schieberbohrung 14 nebeneinander und sind durch Querschotte 18 voneinander getrennt. Diese Querschotte 18 sind mittels Verbindungsabschnitten 15, die in ihrer Stärke gegenüber den Querschotten 18 schmäler ausgebildet sind, einstückig mit dem Ventilkörper 11 verbunden. Dadurch entstehen an der Übergangsstelle vom Ventilkörper 11 zu den Querschotten 18 Nuten 32, deren Öffnungen den Steuerkammern 16 zugewandt sind.

Im Ausführungsbeispiel erstrecken sich die Durchbrüche 17 bis zu den einander gegenüberliegenden Außenseiten des Ventilkörpers 11, wo sie in Öffnungen 19 enden. Alternativ wäre es jedoch auch vorstellbar, die Durchbrüche 17 nur einseitig vorzusehen und somit taschenförmige Steuerkammern 16 zu bilden. In diesem Fall könnte eine der beiden Abdichtplatten 12 entfallen. Diese Abdichtplatten 12 sind beispielsweise mit dem Ventilkörper 11 verschraubt und dichten zusammen mit einer Formdichtung 21 (Figur 2) die Öffnungen 19 und damit die Steuerkammern 16 gegeneinander und nach außen ab. In den Abdichtplatten 12 sind Druckmittelkanäle 22 ausgebildet, die einerseits in die Steuerkammern 16 einmünden und die andererseits in Anschlüssen 23 für das Wegeventil 10 enden. Die Anschlüsse 23 sind auf nicht dargestellte Weise mit dem Zulauf P, dem Rücklauf R oder mit Verbrauchern A,B verbindbar.

Im Bereich der Querschotte 18 sind in die Schieberbohrung 14 ringförmige Ventildichtungen 20 eingesetzt, die in Wirkverbindung mit einem Steuerschieber 29 eine Abdichtung der Steuerkammern 16 bewirken. Um eine axiale Abstützung für diese Ventildichtungen 20 zu schaffen, sind vor der Montage der Abdichtplatten 12 durch die Öffnungen 19 hindurch in die Steuerkammern 16 Stützkörper 25 eingeschoben. Diese Stützkörper 25 sind kastenförmige Hohlkörper mit geschlossener Außenkontur aus zwei quer zur Längsachse der Schieberbohrung 14 angeordneten Stirnwänden 26 und zwei rechtwinklig dazu verlaufenden, einander gegenüberliegenden Seitenwänden 27. Die Seitenwände 27 überragen die Stirnwände 26 beidseitig und bilden dadurch Leisten 33 aus, die in die den Steuerkammern 16 zugewandten Nuten 32 des Ventilkörpers 11 eingreifen. Im montierten Zustand der Stützkörper 25 wird somit ein relativ druckstabiles Gehäuse 13 erreicht.

Um eine Durchströmung der Stützkörper 25 mit Druckmittel zu ermöglichen, sind diese auf ihren den Anschlüssen 23 zugewandten Boden- bzw. Deckelseiten offen. Die beiden Stirnwände 26 stützen sich desweiteren durch Streben 24 gegenseitig ab, was die Formstabilität dieser Stützkörper 25 und damit die Druckfestigkeit des damit ausgestatteten Gehäuses 13 abermals erhöht, ohne die Durchströmung der Stützkörper 25 wesentlich zu beeinträchtigen. In ihren übrigen äußeren Abmessungen sind die Stützkörper 25 auf die Maße der Steuerkammern 16 abgestimmt, so daß ihre Stirnwände 26 und ihre Seitenwände 27 bündig an den Begrenzungsflächen der Steuerkammern 16 anliegen.

In den Stirnwänden 26 der Stützkörper 25 sind miteinander fluchtende Bohrungen 28 gleichen Innendurchmessers ausgebildet, wobei dieser Innendurchmesser nur geringfügig größer als der Innendurchmesser der Ventildichtungen 20 ist. Im montierten Zustand des Wegeventils 10 ergibt sich dadurch eine Duchgangsbohrung, in der ein Steuerschieber 29 längsbeweglich geführt ist.

Dieser Steuerschieber 29 ist als Vollschieber ausgebildet und weist im Ausführungsbeispiel drei zylindrische Kolbenabschnitte 30 auf, die durch Einschnürungen 31 voneinander getrennt sind. Um eine möglichst gute Druckmitteldurchströmung des Wegeventils 10 zu erhalten, sind die Einschnürungen 31 als Kreisbogenabschnitte mit relativ großem Radius versehen. Aus dem selben Grund sind die Kanten der Bohrungen 28 mittels Fasen oder Radien strömungstechnisch optimiert.

Die zylindrischen Kolbenabschnitte 30 des Steuerschiebers 29 wirken mit den Ventildichtungen 20 zusammen. In Abhängigkeit von der momentanen Stellung des Steuerschiebers 29 wird dadurch eine Druckmittelverbindung zwischen zwei benachbarten Steuerkammern 16 verschlossen bzw. an anderer Stelle des Steuerschiebers 29 über die Einschnürung 31 freigegeben. Über eine Längsverschiebung des Steuerschiebers 29 im Gehäuses 13 ist die Druckmittelversorgung der Steuerkammern 16 und damit der Druckmittelkanäle 22 veränderbar, so daß z.B. übliche Funktionen von 5/2- oder 5/3-Wegeventilen steuerbar sind.

Diese Längsverschiebung kann auf nicht dargestellte, aber an sich bekannte Art und Weise über eine auf den Steuerschieber 29 einwirkende Hebelmechanik oder über eine Druckbeaufschlagung der Stirnseiten des Steuerschiebers 29 erfolgen. Hierzu können die Hohlräume 34 an den beiden Enden des Ventilkörpers 11, in die der Steuerschieber 29 mit seinen Enden hineinragt, hydraulisch, pneumatisch oder elektrisch beaufschlagt werden. Auf der dem Steuerschieber 29 zugewandten Seite der Hohlräume 34 ist in diese eine axial montierbare Stützscheibe 35 eingepreßt. Diese Stützscheibe 35 liegt am ersten Durchmesserabsatz der Schieberbohrung 14 an und wirkt als Axialstütze für die dort angeordnete Ventildichtung 20.

Selbstverständlich sind Weiterbildungen oder Ergänzungen am beschriebenen Ausführungsbeispiel möglich.
Diesbezüglich ist zu sagen, daß der Ventilkörper 11 verhältnismäßig einfach und preisgünstig aus Kunststoff in einem Spritzgießverfahren herzustellen ist. Auch die Stützkörper 25 sind auf diese Weise ohne spanende Nachbearbeitung herstellbar.

Das Wegeventil 10 ist insbesondere für pneumatische Anwendungen konzipiert, seine erfindungsgemäße Bauweise ist jedoch auch auf hydraulische Wegeventile übertragbar.

## Patentansprüche

1. Wegeventil (10), insbesondere zur Steuerung pneumatischer Verbraucher, mit einem in einem Gehäuse (13) längsbeweglichen Steuerschieber (29), der Druckmittelverbindungen zwischen wenigstens zwei Steuerkammern (16) des Gehäuses (13) steuert, die mit Anschlüssen (23) verbunden sind und die mit Hilfe von mit dem Steuerschieber (29) zusammenwirkenden Dichtungen (20) gegeneinander bzw. nach außen abgedichtet sind, **dadurch gekennzeichnet, daß** die Steuerkammern (16) jeweils an wenigstens einer der Außenseiten des Gehäuses (13) eine Öffnung (19) aufweisen und durch Querschotte (18) im Gehäuse (13) voneinander getrennt sind, und daß wenigstens in die nach außen offenen Steuerkammern (16) jeweils ein separater Stützkörper (25) zur seitlichen Abstützung der Dichtungen (20) eingesetzt ist.

2. Wegeventil nach Anspruch 1, **dadurch gekennzeichnet, daß** die Stützkörper (25) kastenförmige und vom Druckmittel durchströmbare Hohlkörper sind, die mit ihren Wandungen (26, 27) an den die Steuerkammern (16) begrenzenden Wandungen des Gehäuses (13) bzw. der Querschotte (18) anliegen.

3. Wegeventil nach einem der Ansprüche 1 oder 2, **dadurch gekennzeichnet, daß** die Stützkörper (25) seitlich überstehende und Führungen (33) bildende Seitenwände (27) aufweisen und daß diese Führungen (33) in Nuten (32) an den Übergangsstellen der Querschotten (18) in den Ventilkörper (11) eingreifen.

4. Wegeventil nach einem der Ansprüche 1 bis 3, **dadurch gekennzeichnet, daß** dessen Gehäuse (13) von einem in ihrem Innendurchmesser von außen nach innen mehrmals abgesetzten Schieberbohrung (14) durchdrungen ist, die im Bereich der Querschotte (18) die Dichtungen (20) aufnimmt.

5. Wegeventil nach einem der Ansprüche 1 bis 4, **dadurch gekennzeichnet, daß** die Stützkörper (25) konzentrisch zur Schieberbohrung (14) verlaufende Bohrungen (28) aufweisen, deren Innendurchmesser dem kleinsten Innendurchmesser der Schieberbohrung (14) entspricht.

6. Wegeventil nach einem der Ansprüche 1 bis 5, **dadurch gekennzeichnet, daß** die auf einer gemeinsamen Außenseite des Gehäuses (13) liegenden Öffnungen (19) der Steuerkammern (16) von einer gemeinsamen am Gehäuse (13) befestigbaren Abdichtplatte (12) verschlossen sind.

7. Wegeventil nach Anspruch 6, **dadurch gekennzeichnet, daß** an wenigstens einer der Abdichtplatten (12) die Anschlüsse (23) des Wegeventils (10) ausgebildet und durch Druckmittelkanäle (22) mit den Steuerkammern (16) verbunden sind.

8. Wegeventil nach einem der Ansprüche 1 bis 7, **dadurch gekennzeichnet, daß** die Querschotte (18) einstückig mit dem Gehäuse (13) des Wegeventils (10) ausgebildet sind und kubisch geformte Durchbrüche (17) begrenzen.

9. Wegeventil nach einem der Ansprüche 1 bis 8, **dadurch gekennzeichnet, daß** das Gehäuse (13) bzw. die Stützkörper (25) des Wegeventils (10) aus Kunststoff in einem Spritzgießverfahren hergestellt sind.

10. Wegeventil nach einem der Ansprüche 1 bis 9, **dadurch gekennzeichnet, daß** der Ventilkörper (11) fünf nebeneinanderliegende Steuerkammern (16) aufweist.

11. Wegeventil nach Anspruch 10, **dadurch gekennzeichnet, daß** der Ventilkörper (11) vier kastenförmige Stützkörper (25) aufweist, die in den jeweils außenliegenden und dem Rücklauf (R) und den Verbrauchern (A,B) zugeordneten Steuerkammern (16) eingesetzt sind.

## Claims

1. Directional control valve (10) in particular for controlling pneumatic loads, having a control slide (29) longitudinally displaceable in a housing (13), which control slide controls pressure fluid connections between at least two control chambers (16) of the housing (13), that are in connection with terminals (23) and that are sealed mutually or towards the outside by means of sealing means (20) cooperating with said control slide, **characterized in that** said control chambers (16) each have an opening (19) on at least one of the outer faces of the housing (13) and are separated from each other inside the housing (13) by transverse bulkheads, and that at least a separate support body (25) is inserted into at least the control chambers (16) which are open towards the outside for laterally supporting said sealing means (20).

2. Directional control valve according to claim 1,
**characterized in that** said support bodies (25) are box-type hollow bodies and can be flowed through by the pressure fluid, which hollow bodies, with their walls (26, 27), rest against the walls of the housing (13) and/or the transverse bulkheads (18) delimitating the control chambers (16).

3. Directional control valve according to one of the claims 1 or 2,
**characterized in that** said support bodies (25) have laterally protruding and guides (33) forming side walls (27), and that said guides (33), at the transition points of the transverse bulkheads (18), engage in grooves (32) into the valve body (11).

4. Directional control valve according to any one of claims 1 through 3,
**characterized in that** the housing (13) thereof is penetrated by a slide bore (14) set-off several times in its inner diameter from the exterior to the interior, which receives the sealing means (20) in the zone of the transverse bulkheads (18).

5. Directional control valve according to any one of claims 1 through 4,
**characterized in that** said support bodies (25), running concentrically to the slide bore (14), have bores (28) the inner diameter of which corresponds to the smallest inner diameter of the slide bore (14).

6. Directional control valve according to any one of claims 1 through 5,
**characterized in that** the openings (19) of the control chambers (16) situated on a common outer face of the housing (13) are closed by a common sealing plate (12) which can be fixed on the housing (13).

7. Directional control valve according claim 6,
**characterized in that** at least on one of the sealing plates (12), the terminals (23) of the directional control valve (10) are realized, and are in connection with the control chambers (16) via pressure fluid conduits (22).

8. Directional control valve according to any one of claims 1 through 7,
**characterized in that** said transverse bulkheads (18) are formed integrally with the housing (13) of the directional control valve (10) and delimitate cubically formed breakthroughs (17).

9. Directional control valve according to any one of claims 1 through 8,
**characterized in that** said the housing (13) and/or the support bodies (25) of the directional control valve (10) are manufactured in an injection molding process from a synthetic material.

10. Directional control valve according to any one of claims 1 through 9,
**characterized in that** the valve body (11) has five control chambers (16) lying side-by-side.

11. Directional control valve according to claim 10,
**characterized in that** said valve body (11) has four box-type support bodies (25) inserted in each case into the control chambers (16), which are situated outside and associated to the reflux (R) and the loads (A, B).

## Revendications

1. Distributeur (10), en particulier pour piloter des charges pneumatiques, comportant un tiroir de commande (29) déplaçable dans un boîtier (13) dans le sens de sa longueur, commandant des liaisons de fluide de pression entre au moins deux chambres de commande (16) du boîtier (13), reliées à des raccords (23) et qui, grâce à des joints d'étanchéité (20) agissant conjointement avec le tiroir de commande (29) sont étanchéisées l'une par rapport à l'autre et/ou par rapport à l'extérieur,
**caractérisé en ce que** les chambres de commande (16) présentent chacune une ouverture (19) au moins à l'un des côtés extérieurs du boîtier (13) et sont isolées les unes des autres par des cloisons transversales (18) dans le boîtier (13), et qu'au moins dans les chambres de commande (16) s'ouvrant vers l'extérieur, au moins un corps support (25) individuel est employé pour supporter latéralement les joints d'étanchéité (20).

2. Distributeur selon la revendication 1,
**caractérisé en ce que** les corps support (25) sont des corps creux, en forme de caisson, pouvant être traversés par le fluide de pression, apposés par leurs parois (26, 27) aux parois du boîtier (13) et/ou des cloisons transversales (18) qui délimitent les chambres de commande (16).

3. Distributeur selon l'une des revendications 1 ou 2,
**caractérisé en ce que** les corps support (25) présentent des parois latérales (27) dépassant latéralement et formant des guides (33) et que ces guides (33) s'insèrent dans des rainures (32) du corps de valve (11) aux raccordements des cloisons transversales (18).

4. Distributeur selon l'une des revendications 1 à 3,
**caractérisé en ce que** son boîtier (13) est traversé par un perçage de tiroir (14) d'un diamètre intérieur plusieurs fois étagé de l'extérieur vers l'intérieur qui reçoit les joints d'étanchéité (20) dans la zone des cloisons transversales (18).

5. Distributeur selon l'une des revendications 1 à 4,
**caractérisé en ce que** les corps support (25) présentent des perçages (28) concentriques par rapport au perçage de tiroir (14) et dont le diamètre intérieur correspond au plus petit diamètre intérieur du perçage de tiroir (14).

6. Distributeur selon l'une des revendications 1 à 5,
**caractérisé en ce que** les ouvertures (19) des chambres de commande (16) figurant en une face commune du boîtier (13) sont obturées par une plaque d'obturation (12) commune pouvant se fixer au boîtier (13).

7. Distributeur selon la revendication 6,
**caractérisé en ce qu'**au moins à l'une des plaques d'obturation (12), les raccords (23) du distributeur (10) sont formés et reliés aux chambres de commande (16) par des canaux de fluide de pression (22).

8. Distributeur selon l'une des revendications 1 à 7,
**caractérisé en ce que** les cloisons transversales (18) sont monoblocs avec le boîtier (13) du distributeur (10) et délimitent des traversées (17) de forme cubique.

9. Distributeur selon l'une des revendications 1 à 8,
**caractérisé en ce que** le boîtier (13) et/ou les corps support (25) du distributeur (10) sont fabriqués en matière plastique par moulage par injection.

10. Distributeur selon l'une des revendications 1 à 9,
**caractérisé en ce que** le corps de valve (11) présente cinq chambres de commande (16) placées côte à côte.

11. Distributeur selon la revendication 10,
**caractérisé en ce que** le corps de valve (11) présente quatre corps support (25) en forme de caisson insérés dans chacune des chambres de commande (16) placées à l'extérieur et affectées au retour (R) et aux charges (A, B).
